# EUROPEAN PATENT SPECIFICATION

(11) **EP 1 696 152 B1**
(45) Date of publication and mention of the grant of the patent: **24.08.2011**
(21) Application number: 06110299.2
(22) Date of filing: 22.02.2006
(51) Int. Cl.: F16H 37/08

(54) **Continously varialble transmission**
Stufenloses Getriebe
Transmission à variation continue

(30) Priority: 23.02.2005 JP 2005047823
(43) Date of publication of application: 30.08.2006
(73) Proprietor: Kabushiki Kaisha Equos Research, Tokyo 101-0021 (JP)
(72) Inventor: Tsuchiya, Saoto, Chiyoda-ku, Aichi 101-0021 (JP); Hasebe, Masahiro, Chiyoda-ku, Tokyo 101-0021 (JP); Kai, Norihiro, Anjo-shi, Aichi 444-1192 (JP)
(74) Representative: TBK

(56) References cited:
- WO-A-03/100295
- DE-A1- 10 021 912
- US-A- 5 607 372

## Description

### BACKGROUND OF THE INVENTION

### 1. Field of the Invention

The present invention relates to a continuously variable transmission which is able to obtain a wide range of output speed ratios compared with the speed ratios of a continuously variable speed-change unit, by combining a toroidal-type continuously variable speed change unit and a planetary gear mechanism and using torque circulation. More specifically, the present invention relates to a continuously variable transmission in which an input shaft and an output shaft are arranged on the same axis.

### 2. Description of the Related Art

A continuously variable transmission has been proposed which uses a toroidal-type continuously variable speed change unit and in which all of the members are arranged on a single axis (see WO Publication WO03/100295A1). As shown in FIG. 6(a), this continuously variable transmission 1 includes a toroidal-type continuously variable speed change unit 5, a planetary gear mechanism 6, a counter gear mechanism 7, and a Low/High switching mechanism 10, all of which are arranged on a single axis between an input shaft 12 and an output shaft 13. The toroidal-type continuously variable speed change unit 5 includes input discs 2 and an output disc 3, as well as rollers 4 arranged between these discs such that the radial position of contact with the discs can be changed. The planetary gear mechanism 6 has a carrier C1 on which three pinions P1, P2, P3 are arranged in the axial direction. The counter gear mechanism 7 has a carrier C2 on which two pinions P4, P5 are arranged in the axial direction. The Low/High switching mechanism 10 includes a Low brake L that can hold an output side sun gear S4 of the counter gear mechanism against rotation, and a High clutch H interposed between a second sun gear (i.e., a High mode output gear) S2 of the planetary gear and the output shaft 13.

Accordingly, when the continuously variable transmission 1 is in a Low mode in which the Low brake L is applied and the High clutch H is released, rotation of the carrier C1 into which rotation is directly input from the input shaft 12 combines, at the planetary gear mechanism 6, with the rotation of an input side sun gear S1, the direction of which has been reversed and the speed of which has been changed, via the continuously variable speed change unit 5. This combined rotation is then output to a Low mode output gear (i.e., a third sun gear) S3. The rotation of the output gear S3 is then reversed and output to the output shaft 13.

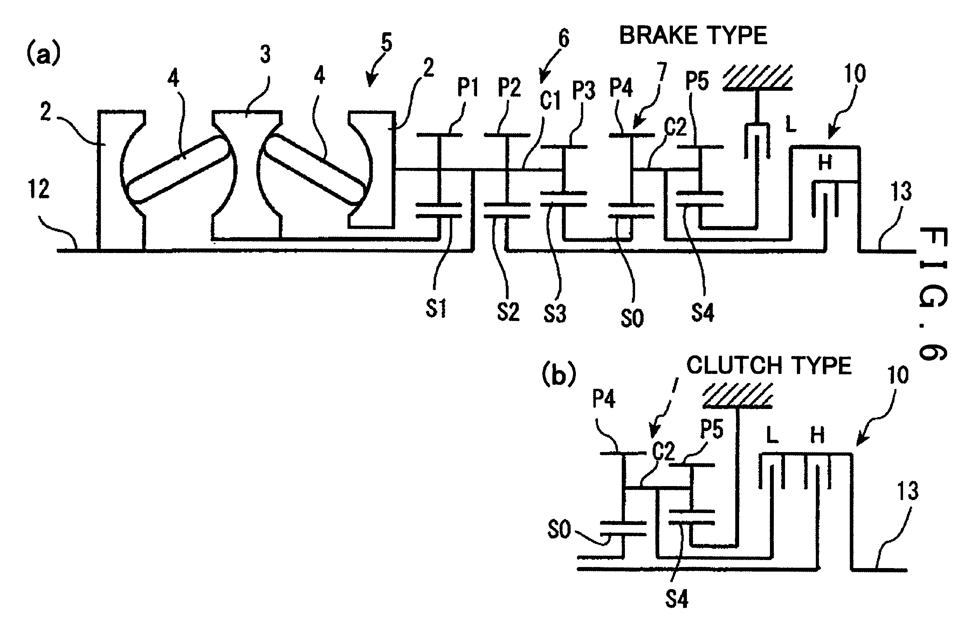

The Low/High switching mechanism 10 may alternatively include a Low clutch L interposed between the carrier C2 and the output shaft 13, as shown in FIG. 6(b), and a High clutch H interposed between the second sun gear S2 of the planetary gear and the output shaft 13 like that described above.

In this continuously variable transmission, the three pinions P1, P2, P3 of the planetary gear mechanism 6 are aligned in series in the axial direction. In addition, the two pinions P4, P5 of the counter gear mechanism 7 are also aligned in series in the axial direction. As a result, the continuously variable transmission is long in the axial direction.

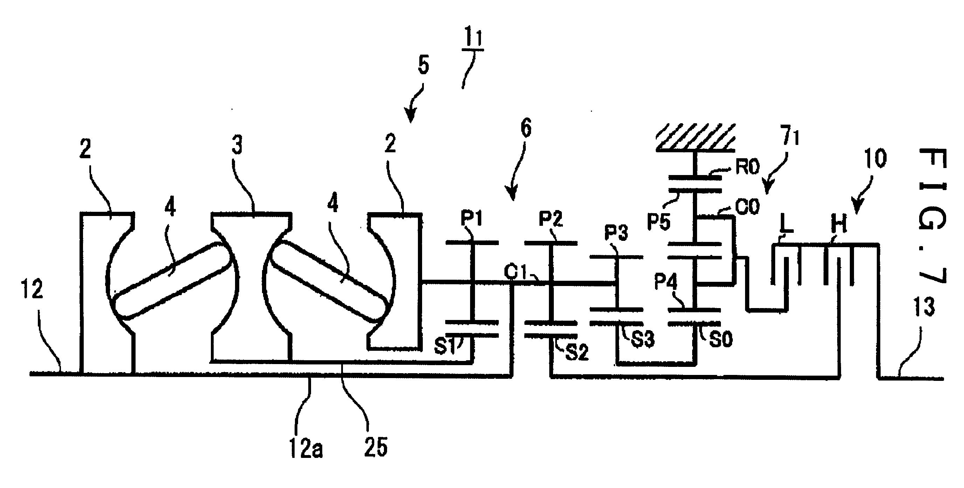

In view of this, the inventors of the present application devised a continuously variable transmission in which the length in the axial direction is decreased by using a double pinion planetary gear for the counter gear mechanism. As shown in FIG. 7, this continuously variable transmission 1₁ includes a toroidal-type continuously variable speed change unit 5 and a planetary gear mechanism 6, which are similar to those described above, and a counter gear mechanism 7₁ which is a double pinion planetary gear. That is, a carrier C0 rotatably supports pinions P4, P5 which are in mesh with each other, while one pinion P4 is in mesh with a sun gear S0 and the other pinion P5 is in mesh with a ring gear R0. The sun gear S0 is connected to the third sun gear (i.e., the Low mode output gear) S3 of the planetary gear mechanism 6, the ring gear R0 is fixed to a case 15, and the carrier C0 is coupled to the output shaft 13 via the Low clutch L.

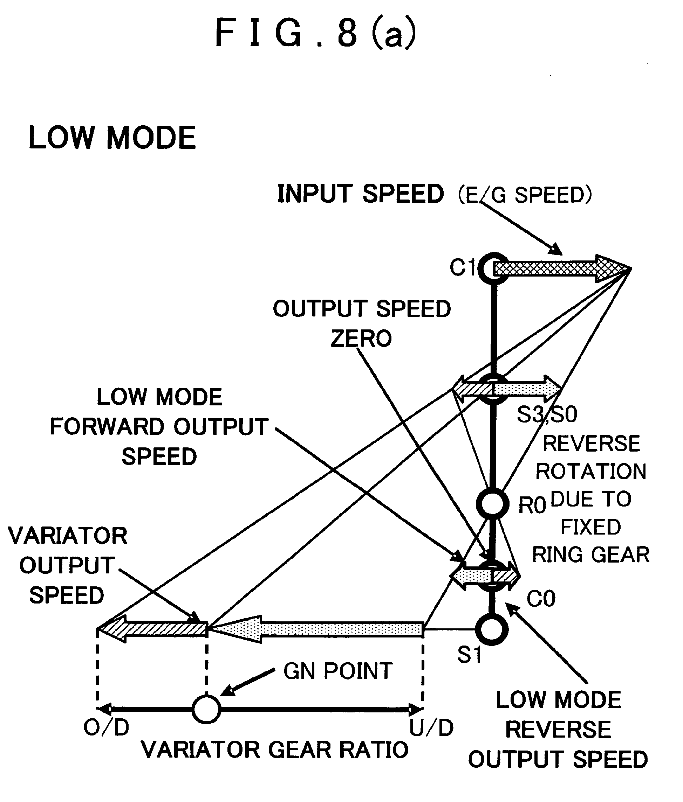

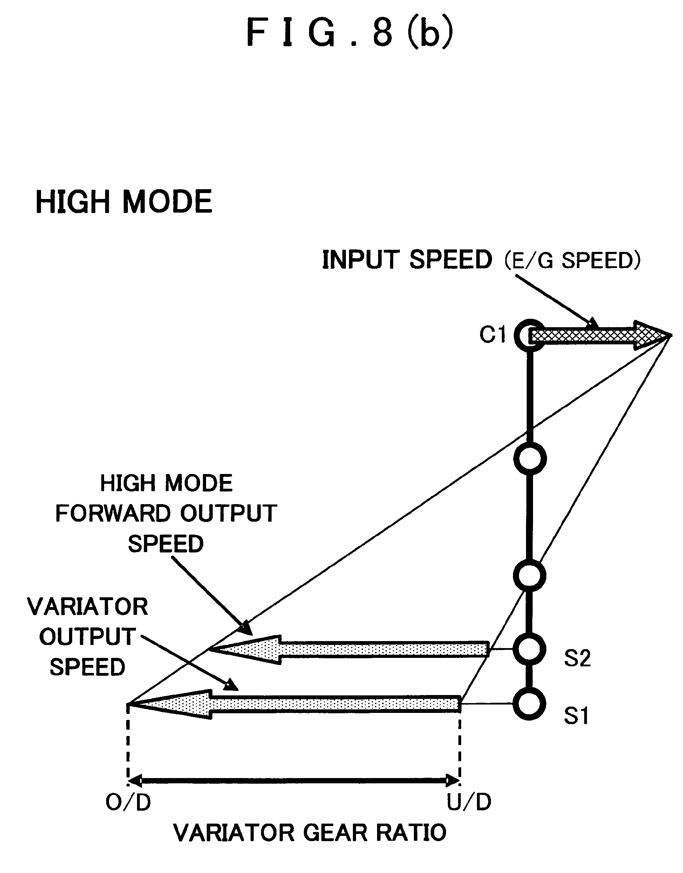

This continuously variable transmission 1₁ operates as illustrated in the velocity diagram of FIG. 8. That is, in a Low mode in which the Low clutch L is applied and the High clutch H is released, rotation of the input shaft 12 (e.g., engine output rotation) is transmitted to the carrier C1 of the planetary gear mechanism 6 via a hollow shaft 12a as well as reversed and transmitted to a first sun gear (i.e., an input gear) S1 via a toroidal-type continuously variable speed change unit (variator) 5. The rotation input to the carrier C 1 and the reversed speed-changed rotation of the input gear S 1 are combined while torque is circulated at the planetary gear mechanism 6, and then output from the third sun gear (i.e., the Low mode side output gear) S3.

Here, because of the relationship between the input side gear ratio (S 1 / P1) and the output side gear ratio (S3 / P3), when the continuously variable speed change unit (variator) 5 is at maximum overdrive (OD: the speed increase side), the output gear S3 rotates in the reverse direction (with the direction of rotation of the input shaft 12 being the forward direction). When the variator 5 shifts from OD to underdrive (UD: the speed decrease side), the output gear S3 passes through the zero rotation (GN: gear neutral) point and starts to rotate in the forward direction. When the variator 5 is at maximum underdrive, maximum forward rotation is obtained.

The rotation of the output gear S3 is transmitted to the input sun gear S0 of the counter gear mechanism 7₁, which is integrated with the output gear S3. That rotation is then reversed because the ring gear R0 is stationary, and output from the carrier C0. The rotation of the carrier C0 is then transmitted to the output shaft 13 via the Low clutch L which is applied. Therefore, the reverse rotation of the output gear S3 becomes forward rotation at the carrier C0 and the output shaft 13. When the continuously variable transmission 1₁ is used as a transmission in an automobile, however, another counter mechanism, not shown, is provided in a differential mechanism on the downstream side in the transmission path of the continuously variable transmission 1₁ so the forward rotation of the output shaft 13 actually becomes reverse rotation output for the vehicle. That is, when the variator 5 changes from OD to UD, the output shaft (i.e., the carrier C0) 13 passes through the GN point (i.e., zero rotation) and shifts to forward rotation.

The mode switches from Low mode to High mode when the Low clutch L is released and the High clutch H is applied. In this state, rotation of the second sun gear (i.e., the High mode output gear) S2 of the planetary gear mechanism 6 is output directly from the output shaft 13 via the High clutch H. As shown in FIG. 8(b), rotation of the input shaft 12 is directly transmitted to the carrier C1 of the planetary gear mechanism 6, as well as reversed and transmitted to the first sun gear (i.e., the input gear) S1 via the toroidal-type continuously variable speed change unit (variator) 5.

The forward rotation of the carrier C1 is combined with the reversed speed-changed rotation of the first sun gear S 1 at the planetary gear mechanism 6, and that combined rotation is output from the second sun gear S2. Here, the input side gear ratio (S 1 / P1) and the output side gear ratio (S2 / P2) are values that are close or the same so an output speed is obtained in which the speed ratio (i.e., the gear ratio) of the variator 5 is off in the reverse direction by a value that substantially corresponds to the forward output speed at maximum UD of the variator 5 in the Low mode. That is, when the variator 5 is at maximum UD, the second sun gear (i.e., the output gear) S2 is at the lowest forward output speed in the High mode. As the variator 5 shifts from the UD side to the OD side, that forward output speed increases. Incidentally, the reverse rotation here actually results in forward rotation with respect to the output of the vehicle because of the other counter mechanism.

Accordingly, when the continuously variable transmission 1₁ is in the Low mode and the variator 5 is at maximum OD, maximum reverse speed is obtained. As the variator 5 shifts to the UD side, it passes through the gear neutral (GN) point, after which forward rotation is obtained and the speed increases in the forward direction until the maximum forward output speed in the Low mode is reached when the variator 5 is at the maximum UD position. When the continuously variable transmission 1₁ is switched to the High mode in this state and the variator 5 is at the maximum UD position, the lowest forward output speed in the High mode is obtained. The lowest output speed in the High mode is substantially the same as the highest output speed in the Low mode. In the High mode, the forward output speed also increases as the variator 5 shifts in the OD direction, such that maximum forward output speed is achieved when the variator 5 is at the maximum OD position.

Accordingly, in the continuously variable transmission 1₁, when the variator 5 shifts from the OD side to the UD side, rotation shifts from reverse rotation to forward rotation after passing through gear neutral. Then when the variator shifts from the maximum UD position toward OD, rotation continues in the forward direction and continues to increase until the maximum output speed is reached.

The continuously variable transmission 1₁ shown in FIG. 7 described above is reduced in length in the axial direction by using a double pinion planetary gear in the counter gear mechanism. The planetary gear mechanism 6 for combining torque is configured such that three pinions are aligned in the axial direction (i.e., a three-step pinion), just like the continuously variable transmission 1 disclosed in Patent Document 1 described above (see FIG. 6).

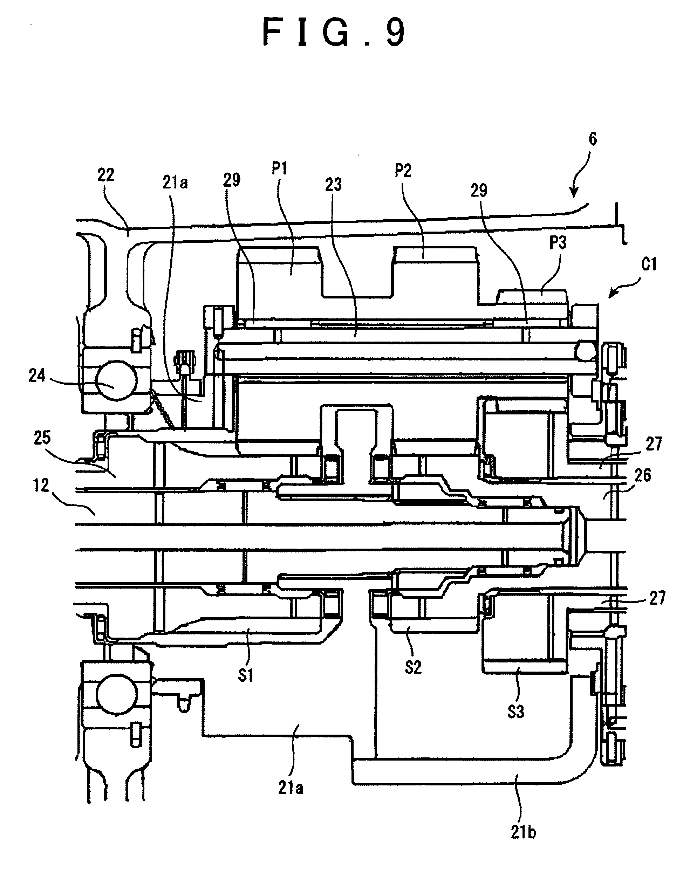

As shown in FIG. 9, the planetary gear mechanism 6 has the carrier C1 which serially supports, in the axial direction, the three pinions P1, P2, P3, a first sun gear (i.e., the input gear) S1 which is in mesh with the first pinion P1, a second sun gear (i.e., the High mode output gear) S2 which is in mesh with the second pinion P2, and a third sun gear (i.e., the Low mode output gear) S3 which is in mesh with the third pinion P3. The carrier C1 has a carrier main body 21 a, which is formed integrally with one of the discs 2 of the toroidal-type continuously variable speed change unit (i.e., the variator 5), and a carrier cover 21b which is integrally formed with the carrier main body 21a. The carrier main body 21a is rotatably supported by a transmission case 22 via a bearing 24. Also, a pinion shaft 23 is provided on the carrier main body 21a and the cover 21b. The first, second, and third pinions P1, P2, P3, which are integrally formed, are rotatably supported via either a needle bearing 29 or a bush on the shaft 23. Here, a bush is also included in the concept of a bearing.

The first sun gear S1 is formed at an end portion of a hollow shaft 25, the base portion of which is coupled to the central output disc 3 of the variator 5 (see FIGS. 6 and 7). An input shaft (core shaft) 12 is rotatably supported via a needle bearing or the like in the hollow portion of the hollow shaft 25. The base portion (toward the front of the vehicle) of this input shaft 12 is coupled to an engine output shaft via a damper, while the end portion (toward the rear of the vehicle) of the input shaft 12 is spline-engaged to the carrier main body 21a. The second sun gear S2 is formed on an intermediate shaft 26 which is connected to the High clutch H of the Low/High switching mechanism (see FIGS. 6 and 7). The third sun gear S3 is formed on a sleeve 27 which is rotatably fitted around the intermediate shaft 26. This sleeve 27 is connected to the sun gear S0 of the counter gear mechanism 7 (see FIGS. 6 and 7).

The fact that the pinion shaft 23 supports all three pinions P1, P2, P3 which are integrally formed serially in the axial direction makes the pinion shaft 23 long in the axial direction, and as described above, because it makes up an IVT (infinitely variable transmission) with torque circulation, i.e., because it performs continuously shifting with the highest forward output speed in the Low mode approximately matching the lowest forward output speed in High mode when the variator 5 is at maximum UD, the gear diameter of the third pinion P3 is smaller, which means the diameter of the pinion shaft 23 also has to be smaller.

As a result, the diameter of the bearing 29 is also smaller, which means the bearing will have a shorter life span. Further, the reduced diameter of the pinion shaft renders the pinion shaft insufficiently rigid, making it susceptible to bending which would increase the load on the bearing. The combination of these factors may result in insufficient precision and life span of the carrier C1.

Moreover, the three pinions P1, P2, P3 which are formed integral with one another are heavy, which results in a large centrifugal load acting on the carrier C1. The structure of the planetary gear mechanism 6 is disadvantageous also with respect to loads such as this centrifugal load.

Also, because the three pinions P1, P2, P3 are aligned in series in the axial direction, the planetary gear mechanism 6 is long in the axial direction such that even if the counter gear mechanism were shortened, the transmission would still be long in the axial direction for a continuously variable transmission.

The configuration of the continuously variable transmission shown in FIGS. 7 and 9 was undisclosed at the time of application of the present invention.

Furthermore, a continuously variable transmission according to the preamble of claim 1 is known from DE 100 21 912 A1.

### SUMMARY OF THE INVENTION

In view of the foregoing problem, it is the object of the present invention to provide a continuously variable transmission which is able to solve the foregoing problems using a simple planetary gear for a Low mode.

According to the present invention, this object is solved with a continuously variable transmission having the features of claim 1.

In detail the present invention provides a continuously variable transmission which includes the planetary gear mechanism includes a two-step pinion and a simple planetary gear. The pinion shaft is short but long enough to support two rows of pinions in the axial direction. As a result, the bearing which rotatably supports the two rows of pinions can be large in diameter, which increases the length of the bearing life span and reduces bending of the pinion shaft and thus the load fluctuation on the bearing that results from that bending. Further, the pinion weight is lightened such that the load caused by the centrifugal load is reduced. The combination of these factors improves the precision with which the pinion is supported and enables that high precision to be maintained over an extended period of time.

Moreover, in the Low mode, power can be transmitted through the simple planetary gear, which makes it easier to set the gear ratio as an IVT. Also, increasing the number of teeth on the pinion of the first carrier makes it possible to maintain the gear strength at a small tooth width and shorten the planetary gear mechanism in the axial direction so that the continuously variable transmission can be made more compact.

Further, the input shaft and the input disc of the toroidal speed change unit may be connected to the first carrier, the output disc of the toroidal speed change unit may be connected to the first sun gear, and the center portion of the toroidal speed change unit may be configured by two heavy shafts, thus resulting in compact and logical connective relationships.

Additionally, the present invention further provides a continuously variable transmission which includes the planetary gear mechanism such that the first carrier is connected to the ring gear of the simple planetary gear and the second sun gear is connected to the sun gear of the simple planetary gear. As a result, the connections are succinct and logical so the length of the planetary gear mechanism is shorter in the axial direction, thereby enabling the continuously variable transmission to be made more compact as well as enabling the reliability of the continuously variable transmission to be increased.

In addition, according to the foregoing structure, the counter gear mechanism may include a double pinion planetary gear. As a result, the counter gear mechanism can be made shorter in the axial direction, thus making the continuously variable transmission even more compact, enabling it to be shorter in the axial direction in particular.

In addition, according to the foregoing structure, the carrier of the single planetary gear of the planetary gear mechanism may be formed integral with the carrier of the counter gear mechanism. As a result, the planetary gear mechanism and the counter gear mechanism are inseparably connected together so as to form an overall compact and simple mechanism, thus enabling the continuously variable transmission to be more compact and reliable.

In addition, according to the foregoing structure, the toroidal-type continuously variable speed change unit, which receives a large force (thrust) in the axial direction, including the input shaft which is substantially integral with the input disc of the toroidal-type continuously variable speed change unit and the carrier of the planetary gear mechanism, may be supported such that thrust is cancelled out. Further, the continuously variable speed change unit and the first and second sun gears may be supported such that thrust, including the thrust that acts on the first and second sun gears, is cancelled out. As a result, the toroidal-type continuously variable speed change unit and the planetary gear mechanism are supported as a single system such that thrust is cancelled out, which enables highly precise support to be maintained over an extended period of time, thus increasing the length of life of the continuously variable transmission.

In addition, according to the foregoing structure, the thrust generated in the planetary gear mechanism caused by the helical gears acts to cancel itself out in the planetary gear mechanism by the first thrust bearing interposed between the first sun gear and the first carrier and the second thrust bearing interposed between the first carrier and the sun gear of the simple planetary gear. Therefore, for example, it is no longer necessary to provide a thrust bearing between the first carrier and the second sun gear so the number of thrust bearings can be reduced, and the continuously variable transmission can be made more compact in the axial direction.

### BRIEF DESCRIPTION OF THE DRAWINGS

FIG. 1 is a schematic illustrating a configuration of an infinitely variable transmission according to the present invention;
FIG. 2 is a velocity diagram, with (a) illustrating a Low mode and (b) illustrating a High mode;
FIG. 3 is a graph showing the relationship between the speed ratio of a continuously variable speed change unit and the speed ratio of the continuously variable transmission;
FIG. 4 is a schematic illustrating one embodiment of which a portion has been modified;
FIG. 5 is a sectional view of a main portion of an embodiment according to the present invention;
FIG. 6 is a schematic of related art, with (a) and (b) showing types having a portion that is different;
FIG. 7 is a schematic showing prior technology of the present invention that was devised by the inventors which is based on the related art;
FIG. 8 is a velocity diagram, with (a) illustrating a Low mode and (b) illustrating a High mode; and
FIG. 9 is a sectional view showing a configuration of a main portion of the prior art.

### DETAILED DESCRIPTION OF THE PREFERRED EMBODIMENTS

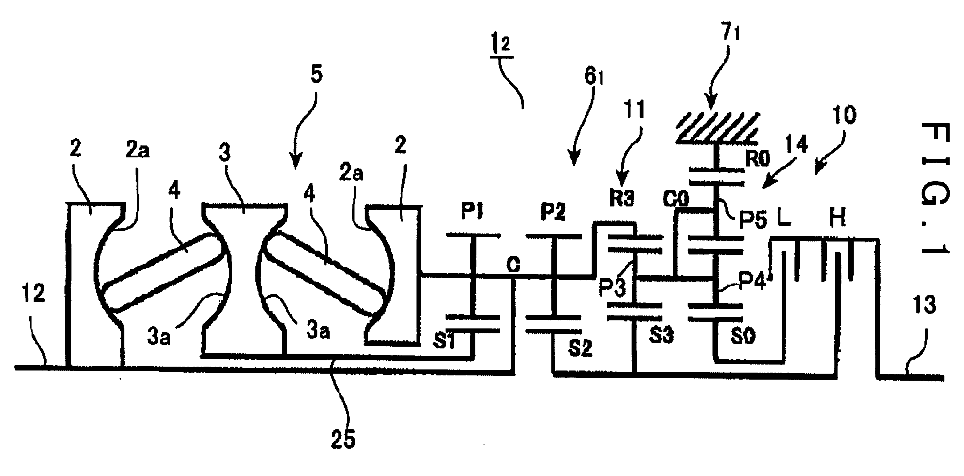

Hereinafter, an example embodiment of the present invention will be described with reference to FIGS. 1 to 5.

An infinitely variable transmission (IVT) 1₂ includes a continuously variable speed change unit (variator) 5, a planetary gear mechanism 6₁, a counter gear mechanism 7₁, and a Low/High switching mechanism 10, as shown in FIG. 1. The continuously variable speed change unit 5 is a full toroidal-type continuously variable speed change unit and includes two input discs 2, 2 connected to an input shaft 12, one output disc 3 connected to a hollow shaft 25, and power rollers 4, 4 that are sandwiched between the input discs and the output disc. The input discs 2 and the output disc 3 have arc-shaped concave grooves 2a, 3a that form part of a circle and which face each other so as to form two cavities that sandwich two rows of power rollers, such that the thrust from one of the input discs is cancelled out by the thrust from the other input disc. The power rollers 4, 4 are tilted by shifting them in a direction perpendicular to the shaft, and shifting is performed continuously and steplessly by changing the contact radius of the input discs 2 and the output disc 3. This variator 5 has a speed ratio (i.e., output speed / input speed) of -0.4 to -2.5. The speed ratio is negative (minus) because the output disc 3 rotates in the opposite direction from the input discs 2.

The planetary gear mechanism 6₁ includes a front carrier (i.e., a first carrier) C which has two pinions P1, P2, and a Low mode simple planetary gear 11. This Low mode simple planetary gear 11 includes a rear carrier C0 which is in common with a double pinion planetary gear 14 of the counter gear mechanism 7₁. The two pinions (i.e., the first pinion and the second pinion) P1, P2 are integrally formed and are rotatably supported on a common pinion shaft. The front carrier C which supports these pinions is connected to a ring gear R3 of the Low mode simple planetary gear 11. The front carrier C is connected to the input shaft 12 as well as to one of the input discs 2, so rotation of the input shaft 12 is transmitted.

The first pinion P 1 is in mesh with the first sun gear S 1 that is connected to the output disc 3 of the variator 5. This first sun gear S 1 serves as an input gear into which speed-changed rotation from the variator 5 is input. The second pinion P2 is in mesh with the second sun gear S2 which serves as a High mode output gear. The second pinion P2 is also integrally connected to a (third) sun gear S3 of the Low mode simple planetary gear 11. These second and third sun gears S2, S3 are both connected to the output shaft 13 via a High clutch H of the Low/High switching mechanism 10 and thus serve as High mode output gears.

The counter gear mechanism 7₁ includes a double pinion planetary gear 14 that has two pinions (a fourth pinion P4 and a fifth pinion P5) which are in mesh with each other. The carrier C0 of the double pinion planetary gear 14 is also integrally formed with the carrier of the Low mode simple planetary gear 11, as described above. A (second) ring gear R0 is fixed to a case 22, and a (fourth) sun gear S0 is connected to the output shaft 13 via a Low clutch L.

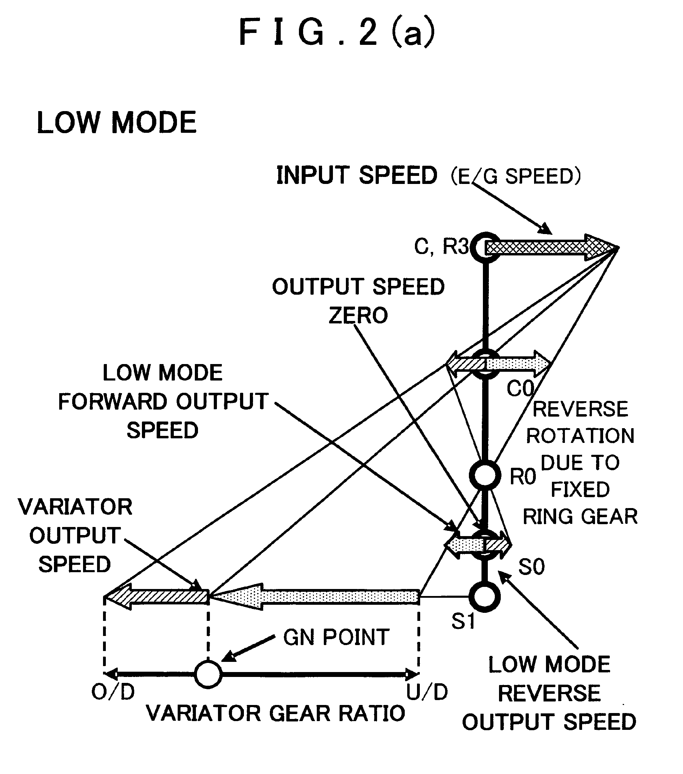

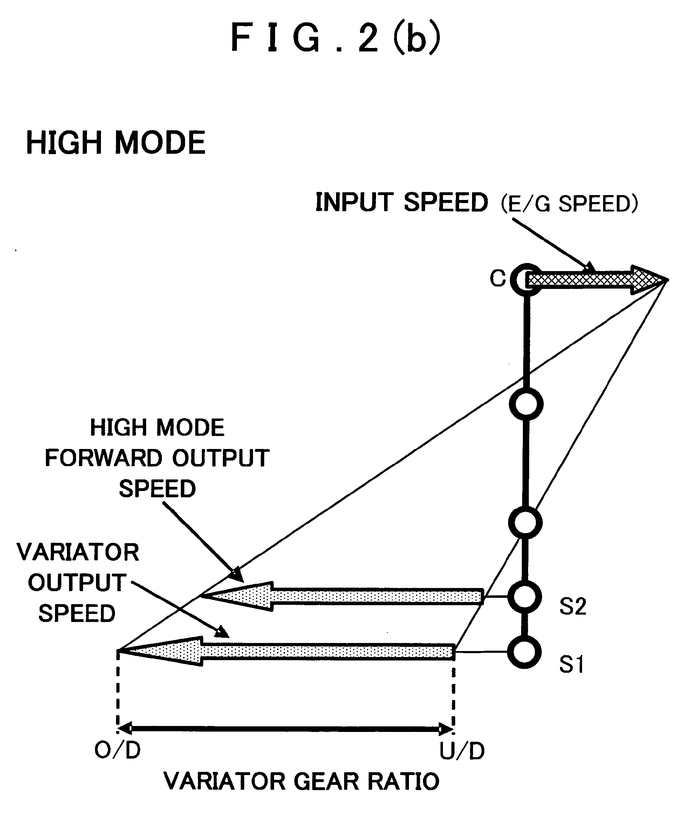

This infinitely variable transmission (IVT) 1₂ operates as illustrated in the velocity diagram in FIG. 2. In the velocity diagram in FIG. 2, the first and second pinions P1, P2 are common long pinions, the gear ratios S1 / P1 and S2 / P2 are changed, and the output speed and the variator output line do not overlap. However, the gear ratios (S 1 / P1) (S2 / P2) may be the same and the output speed and the variator output line may of course overlap.

In the Low mode in which the Low clutch L is applied and the High clutch H is released, as shown in FIG. 2(a), the rotation of the input shaft 12 which is connected to the engine output shaft is transmitted directly to the front carrier C and the ring gear R3 of the planetary gear mechanism 6₁, and reversed and speed-changed rotation is transmitted to the first sun gear (i.e., the input gear) S1 via the variator 5. The rotation of the front carrier C and the ring gear R3 and the speed-changed rotation (i.e., the variator speed ratio) of the first sun gear S 1 are combined while torque is circulated at the planetary gear mechanism 6₁ and the resultant rotation is output to the output carrier C0 of the Low mode simple planetary gear. Here, when the variator 5 shifts from the OD side to the UD side, the output carrier C0 changes from reverse rotation to the gear neutral position (GN point), i.e., a position in which the output speed becomes zero and torque is endlessly released. When the variator 5 shifts farther to the OD side, rotation of the output carrier C0 accelerates in the forward direction (i.e., the same direction as that in which the input shaft rotates).

The rotation of the output carrier C0 is directly transmitted to the carrier of the counter gear mechanism 7₁, which is a common carrier. This rotation is then reversed because the ring gear R0 is held stationary, and output from the sun gear S0. As a result, the rotation of the output carrier C0 is reversed. Reverse rotation of the output carrier C0 is output as a reverse output speed to the sun gear S0 and forward rotation of the output carrier C0 is output as a forward output speed to the sun gear S0.

The mode switches from Low mode to High mode when the Low clutch L is released and the High clutch H is applied. In this state, rotation of the input shaft 12 is directly transmitted to the front carrier C of the planetary gear mechanism 6₁, while reversed speed-changed rotation is transmitted to the first sun gear S1 from the variator 5. These two rotations are then combined by the planetary gear mechanism 6₁ and output from the second sun gear S2 which serves as the High mode output gear. At this time, the sun gear S0 and the carrier C0 of the counter gear mechanism 7₁ rotate idly because the Low clutch L is released. Therefore the ring gear R3 of the planetary gear mechanism 6₁ also rotates idly. Also, the gear ratios S1 / P1 and S2 / P2 have close or the same values, so a rotation that is close to or the same as the speed-changed output rotation from the variator 5 (i.e., the variator gear ratio) is output from the second sun gear S2, and the variator gear ratio is output as a High mode forward output speed from the output shaft 13 because the High clutch H is applied.

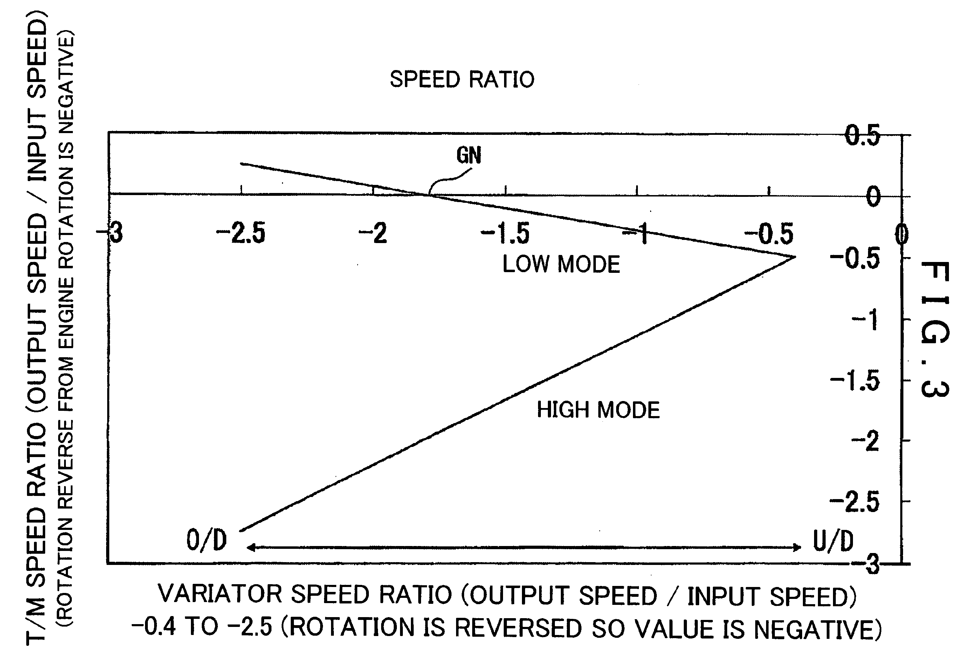

The foregoing will now be explained with the graph in FIG. 3. That is, when the speed ratio (i.e., output speed / input speed) of the variator 5 is at the OD end, (approximately -2.5), the infinitely variable transmission (IVT) 1₂ rotates at a predetermined speed ratio (approximately 0.25) in the forward direction (i.e., the positive direction). When the variator 5 shifts continuously to the UD side, the speed ratio of the IVT 1₂ continuously decreases until the speed ratio of the IVT 1₂ becomes 0, i.e., reaches the gear neutral (GN) point, at a speed ratio near -1.8 of the variator 5. Then, when the variator 5 shifts continuously toward UD, the speed ratio of the IVT 1₂ continuously accelerates in the reverse direction (i.e., the negative direction). When the variator 5 reaches the UD end (approximately -0.4), the speed ratio of the IVT 1₂ is approximately -0.5.

In this state, the mode switches to the High mode. When the speed ratio of the variator 5 is at the UD end in the High mode, the speed ratio of the IVT 1₂ is the same value (i.e., approximately -0.5) that it was in the Low mode. This time, when the speed ratio of the variator shifts continuously from the UD end toward OD, the speed ratio of the IVT 1₂ accelerates continuously in the reverse direction (i.e., the negative direction) from the Low mode. The acceleration in the reverse direction continues as the variator 5 shifts farther toward OD. When the speed ratio of the variator 5 reaches the OD end (approximately -2.5), the speed ratio of the IVT 1₂ is approximately -2.75 which is the maximum speed ratio.

In the graph, the direction of rotation of the input shaft 12 (i.e., the direction of engine rotation) is the forward direction, so the speed ratio is denoted with a plus sign. Accordingly, the variator 5 rotates in reverse due to the toroidal system, so the speed ratio thereof is negative. Because this infinitely variable transmission (IVT) 1₂ is used in a vehicle where rotation is reversed again by a counter gear in a differential mechanism, the vehicle travels in reverse when the speed ratio of the IVT 1₂ is positive, and forward when the speed ratio is negative. Accordingly, when the variator 5 shifts from the OD end toward UD in the Low mode, the vehicle changes from reverse travel to forward travel after passing through gear neutral (GN). The vehicle then gradually accelerates and the mode switches to the High mode at the UD end of the variator 5. When the variator 5 shifts from the UD end toward OD, the vehicle continuously accelerates in the forward direction.

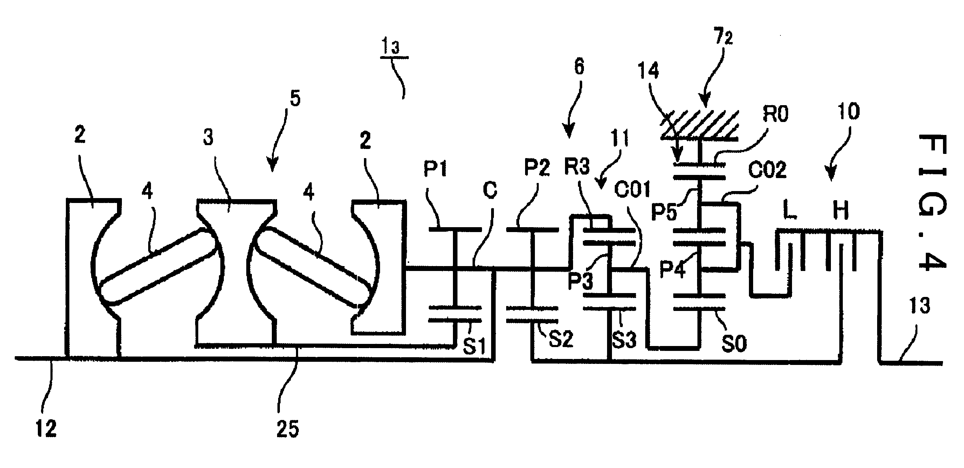

FIG. 4 shows an infinitely variable transmission of which a portion has been modified. In this infinitely variable transmission 1₃, the structures of the continuously variable speed change unit (variator) 5, the planetary gear mechanism 6₁, and the counter gear mechanism 7₁ are similar to those of the previous embodiment, but the connective relationships of the planetary gear mechanism 6₁ and the counter gear mechanism 7₁ are different. That is, the carrier C01 of the Low mode simple planetary gear 11 is connected to the sun gear S0 of the counter planetary gear 14 and the carrier C02 of the counter planetary gear 14 is connected to the output shaft 13 via the Low clutch L.

In this example embodiment, when the Low mode output carrier C0 is replaced with the sun gear S0 and the output element S0 is replaced with the carrier C02 in FIG. 2, the velocity diagram is the same as the velocity diagram shown in FIG. 2. That is, in the Low mode, the rotation of the output carrier C01 is input to the sun gear S0 of the counter gear mechanism 7₂. That rotation is then reversed because the ring gear R0 is fixed, and output from the carrier C02 to the output shaft 13. In the counter gear mechanisms 7₁, 7₂, a Low brake that can hold the ring gear R0 stationary may of course also be used instead of the Low clutch.

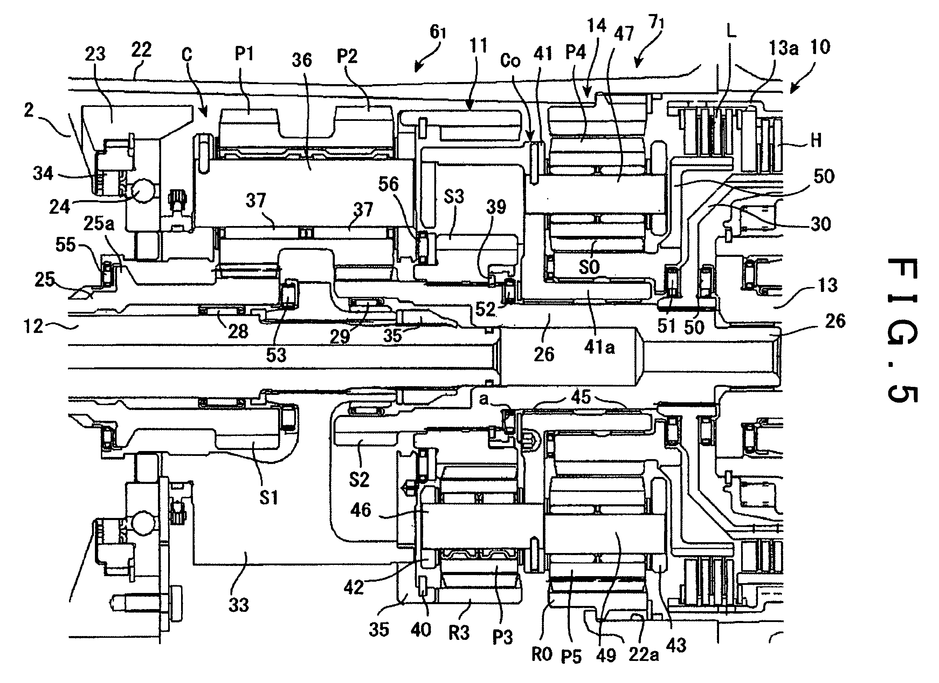

FIG. 5 is a sectional view illustrating an example embodiment of the planetary gear mechanism 6₁ and the counter gear mechanism 7₁ according to the present invention. The planetary gear mechanism 6₁ has a front carrier C and a carrier C0 that is also used by the counter gear mechanism 7₁. The front carrier C includes a carrier main body 33 and a carrier cover 35 which is integrally connected to the carrier main body. The carrier main body 33 is rotatably supported via a bearing 24 by an L-shaped plate 23 integrally attached to the transmission case 22. The carrier main body 33 is also connected to one of the input discs 2 of the variator 5, as well as spline-connected to the input shaft 12, which extends through the center of the variator 5, and tightened with a nut 35.

The L-shaped plate 23 is integrally formed with a block that houses an actuator that operates the power roller 4 of the variator 5. The variator 5 and the planetary gear mechanism 6₁ are assembled as a sub-assembly to the L-shaped plate via the ball-bearing 24. This sub-assembly is then assembled to the case 22. A one-way clutch 34 is mounted adjacent to the ball-bearing 24 on the L-shaped plate 23. This one-way clutch 34 prevents reverse rotation of the input disc 2.

A pinion shaft 36 is supported across the carrier main body 33 and the carrier cover 35. This pinion shaft 36 supports a first pinion P1 and a second pinion P2 arranged in the axial direction. The first pinion P 1 and the second pinion P2 are integrally formed and may have the same number of teeth, but in this example embodiment the number of teeth differs slightly. These common pinions P1, P2 are rotatably supported on the pinion shaft 36 via needle bearings 37, 37 (or bushes). The first pinion P1 is in mesh with the first sun gear S 1 and the second pinion P2 is in mesh with the second sun gear S2.

The first sun gear S 1 is formed on an end portion of the hollow shaft 25. This hollow shaft 25 is rotatably supported around the input shaft 12 via a needle bearing 28. The hollow shaft 25 is also connected at the base end portion to the output disc 3 of the variator 5. The second sun gear S2 is formed on the base end portion of the intermediate shaft 26. The intermediate shaft 26 is rotatably supported at its base end portion via a needle bearing 29 around the (carrier C which is integrated with the) input shaft 12, and is connected at its tip end (i.e., the rearward) side to a clutch hub 30 of the High clutch H of the Low/High switching mechanism 10. A third sun gear S3 is connected to the intermediate shaft 26 by spline engagement and is prevented from slipping off by a snap ring 39. Also, a ring gear R3 is integrally engaged with the carrier cover 35 of the front carrier C by a snap ring 40. The third sun gear S3, the ring gear R3, and the rear carrier C0 which is integral with the counter gear mechanism 7₁ together form the simple planetary gear 11 of the planetary gear mechanism 6₁.

The output (common) carrier C0 includes a carrier main body 41 that has a boss portion 41 a positioned in the center and on the inner radial side of the carrier C0, and front and rear carrier covers 42, 43 that form left and right side plates. The boss portion 41 a of the carrier main body 41 is rotatably supported via a bush 45 by the intermediate shaft 26. A pinion shaft 46 is non-rotatably supported between the carrier main body 41 and the carrier cover 42. A pinion P3 is rotatably supported on this pinion shaft 46. This pinion P3 is in mesh with the third sun gear S3 and the ring gear R3, and together these form the simple planetary gear 11.

A first pinion shaft 47 and a second pinion shaft 49 are non-rotatably supported between the carrier main body 41 and the rear carrier cover 43. A fourth pinion P4 is rotatably supported on the first pinion shaft 47, and a fifth pinion P5 is rotatably supported on the second pinion shaft 49. These pinions P4, P5 are in mesh with each other, and one of the pinions P4 is also in mesh with the sun gear S0 while the other of the pinions P5 is in mesh with the ring gear R0. Together these form the double pinion planetary gear 14 of the counter gear mechanism 7. Further, the ring gear R0 is engaged with splines 22a that are formed on the transmission case 22 and is therefore a fixed ring gear. A Low clutch hub 50 is integrally formed with the sun gear S0 by welding or the like. The Low clutch L and High clutch H, which are both wet type multiple disc clutches, are interposed between the hubs 30 and 50 and a drum 13a that is formed on the output shaft 13 (see FIG. 1). Together these form the Low/High switching mechanism 10.

Thrust bearings 50, 51 are interposed between the end surface of the output shaft 13 positioned in the axial direction in the case 22 and the end surface of the sun gear S0 so as to sandwich the High clutch hub 30. Also, a thrust bearing 52 is interposed between a step portion a of the intermediate shaft 26 and the carrier main body 41. These thrust bearings position the counter gear mechanism 7₁ and the Low/High switching mechanism 10 in the axial direction. Further, a (first) thrust bearing 53 is interposed between the main body 33 of the carrier C which is positioned by the nut 35 on the input shaft 12, and the tip end (to the rear side of the vehicle) of the hollow shaft 25 which extends from the output disc and on which the first sun gear S1 is formed. A thrust bearing 55 is also interposed between a flange portion 25a of the hollow shaft 25 and the rear end of the input disc 2. In addition, a (second) thrust bearing 56 is interposed between the sun gear S3 and the rear end portion (i.e., the rear side surface of the carrier cover 35) of the front carrier C.

The variator 5 and the planetary gear mechanism 6₁ are structures which are supported such that thrust is cancelled out, with the input shaft 12 and the front carrier C which is integral with the input shaft 12 in the axial direction, together with the output disc 3 and the hollow shaft 25 which is positioned in the axial direction by the thrust bearings 53, 55, 56 being a single unit. Further, the pinion and sun gear (S 1 / P1) (S2 / P2) which are in mesh with each other in the planetary gear mechanism 6₁ are helical gears, so thrust forces from these act in directions such that they cancel each other out when power is being transmitted. That is, the thrust generated in the first sun gear S 1 acts in the direction toward the right in the drawing (i.e., toward the rear of the vehicle) on the carrier C via the thrust bearing 53, while the thrust from the second sun gear S2 acts in the direction toward the left in the drawing (i.e., toward the front of the vehicle) on the third sun gear S3 via the intermediate shaft 26 and the snap ring 39, and further, acts in the direction toward the left in the drawing (i.e., toward the front of the vehicle) on the carrier C via the thrust bearing 56. Accordingly, the thrust forces of the first and second sun gears S1, S2 act to push against each other and therefore cancel each other out in the carrier C. Also, because the thrust of the second sun gear S2 acts on the carrier C via the thrust bearing 56 and the snap ring 39 that positions the third sun gear S3, a thrust bearing does not need to be provided between the second sun gear S2 and the carrier main body 33 so as to oppose the thrust bearing 53. Thus, the number of thrust bearings can be reduced and the continuously variable transmission can be made compact in the axial direction. Therefore, the two input discs 2, 2 are supported such that the large thrust forces (squeezing force) therebetween that are generated in the variator 5 cancel each other out, so the variator 5 and the planetary gear mechanism 6₁ are structures that are supported as a single system which cancels out the generated thrust.

The pinion shaft 36 has a short structure (compared with the step pinion shown in FIG. 7) which is just long enough to support the two pinions P1, P2. Further, the Low mode output gear is the simple planetary gear 11, so there is little restriction to the gear ratio for achieving the function as an IVT 1₂ and the pinion shaft 36 can have a large diameter. As a result, the bearing 37 can have a large diameter which increases its life span and the pinion shaft 36 has improved rigidity which reduces load fluctuations on the bearing due to bending of the shaft. In addition, the weight of the pinions is reduced which reduces the load caused by centrifugal load. As a result of these factors, the precision with which the pinions P1, P2 are supported can be maintained over an extended period of time.

Also, the variator 5 and the planetary gear mechanism 6₁ are supported as an integrated system such that the thrust forces acting on the first and second sun gears S1, S2 that are in mesh with the first and second pinions P1, P2 are cancelled out within the planetary gear mechanism 6₁. As a result, in combination with the thrust being cancelled out by the integrated structure of the variator input disc 2 of the carrier C and the input shaft 12, the thrust load on the case 22 of the infinitely variable transmission 1₂ is also reduced.

Further, the counter gear mechanism 7₁ and the simple planetary gear 11 of the planetary gear mechanism 6₁ use the same carrier C0. As a result, the planetary gear mechanism 6₁ and the counter gear mechanism are connected in an organized manner. These two factors enable the infinitely variable transmission 1₂ to be made compact in both the axial and radial directions.

According to the foregoing configuration, the precision of the infinitely variable transmission (IVT) is able to be improved, and the length of life is thus extended. In addition, the infinitely variable transmission (IVT) can be made more compact.

In the example embodiment described above, a full toroidal-type continuously variable speed change unit is used. Alternatively, however, a half toroidal-type continuously variable speed change unit may of course also be used. Also, in the planetary gear mechanism 6₁, the simple planetary gear 11 has a short, logical connective configuration, with the ring gear R3 connected to the front carrier C and the sun gear S3 connected to the second sun gear S2, but it is not limited to this configuration; other connective configurations are also possible.
Rotation of an input shaft 12 is directly transmitted to a front carrier C of a planetary gear mechanism 6₁, and rotation which is speed-changed and reversed by a variator 5 is transmitted to a sun gear S1. When a Low clutch L is applied, rotation of an output carrier C0 of a simple planetary gear 11 is transitted to a counter gear mechanism 7₁ via a common carrier, and output from an output shaft 13. When a High clutch H is applied, rotation of a sun gear S2 is transmitted to the output shaft 13. Thus, a pinion shaft is long and has a small diameter and the life span of the bearing is not sufficient with a planetary gear mechanism that has a three-step pinion.

## Claims

1. A continuously variable transmission which comprises a planetary gear mechanism (6), a counter gear mechanism (7), and a Low/High switching mechanism (10), wherein:
the planetary gear mechanism (6) comprises a first carrier (C) that has a first pinion (P1) and a second pinion (P2) which are arranged in the axial direction and which rotate together as a unit, a first sun gear (S1) that is in mesh with the first pinion (P1),
**characterized in that**
the planetary gear mechanism (6) comprises one simple planetary gear (11) which transmits rotation of the first carrier (C) and of the first sun gear (S1) to the counter gear mechanism (7), wherein the simple planetary gear (11) has a first element (R3), a second element (S3), and a third element (C0), wherein the first carrier (C) is connected to the first element (R3) of the simple planetary gear (11) and the second sun gear (S2) is connected to the second element (S3) of the simple planetary gear (11).

2. The continuously variable transmission according to claim 1, wherein the second sun gear (S2) is in mesh with the second pinion (P2).

3. The continuously variable transmission according to claims 1 or 2, further comprising a toroidal-type continuously variable speed change unit (5), wherein
rotation of an input shaft is input to the first carrier (C), and output rotation, which is the rotation of the input shaft (12) after the direction and speed thereof have been changed by the toroidal-type continuously variable speed change unit (5), is input to the first sun gear (S1).

4. The continuously variable transmission according to any of claims 1 or 3, wherein
in a Low mode according to the Low/High switching mechanism (10), rotation of the third element (C0) of the simple planetary gear (11) is reversed in direction by the counter gear mechanism (7) and output to an output shaft (13); and
in a High mode according to the Low/High switching mechanism (10), rotation of the second sun gear (S2) is output to the output shaft (13).

5. The continuously variable transmission according to any of claims 1, 3 or 4, wherein the first element (R3) of the simple planetary gear (11) is a ring gear (R3), the second element (S3) is a sun gear (S3), and the third element is a carrier (C0, C01).

6. The continuously variable transmission according to claim 5, wherein the third carrier (C0, C01) has a third pinion (P3) that is in mesh with the ring gear (R3) and the sun gear (S3) of the simple planetary gear (11).

7. The continuously variable transmission according to claim 5 or 6, wherein the counter gear mechanism (7) includes a double pinion planetary gear (14) that has a third carrier (C0) which supports fourth and fifth pinions (P4, P5) that are in mesh with each other, a fourth sun gear (S0) that is in mesh with the fourth pinion (P4), and
a second ring gear (R0) that is in mesh with the fifth pinion (P5);
the carrier (C0) of the simple planetary gear (11) in the planetary gear mechanism (6) and the third carrier (C0) are integrally formed; and,
in the Low mode, rotation of the fourth sun gear (S0) is transmitted to the output shaft (13) while the second ring gear (R0) is held against rotation.

8. The continuously variable transmission according to claim 5 or 6, wherein the counter gear mechanism (7) includes a double pinion planetary gear that has a third carrier (C01) which supports fourth (P4) and fifth pinions (P5) that are in mesh with each other, a fourth sun gear (S0) that is in mesh with the third pinion (C01), and a second ring gear (R0) that is in mesh with the fifth pinion (P5);
the carrier (C01) of the simple planetary gear (11) in the planetary gear mechanism (6) and the fourth sun gear (S0) are connected; and,
in the Low mode, rotation of the third carrier (C01) is transmitted to the output shaft (13) while the second ring gear (R0) is held against rotation.

9. The continuously variable transmission according to any one of claims 1, 3 to 8, wherein the toroidal-type continuously variable speed change unit (5) has two input discs (2), an output disc (3) positioned between these two input discs (2), and rollers (4) sandwiched between the input discs (2) and the output disc (3);
the two input discs (2), the input shaft (12), and the first carrier (C) of the planetary gear mechanism (6) are all substantially formed integrally with one another and the continuously variable speed change unit (5) and the planetary gear mechanism (6) are supported such that thrust is cancelled out; and
the first and second sun gears (S1, S2) are supported in the thrust direction via thrust bearings (53) with respect to the integrally formed first carrier (C) or input shaft (12).

10. The continuously variable transmission according to claim 9, wherein the first thrust (53) bearing is interposed between the first sun gear (S1) and the first carrier (C);
a second thrust bearing (56) is interposed between the first carrier (C) and the sun gear (S3) of the simple planetary gear (11); and
thrust from the first sun gear (S1) that acts on the first carrier (C) and thrust from the second sun gear (S2) that acts via the third sun gear (56) which is integrated with the second sun gear (S2) in substantially the axial direction work to push against each other with substantially the same force via the first and second thrust bearings (53, 56).

## Patentansprüche

1. Kontinuierlich variables Getriebe, welches einen Planetengetriebemechanismus (6), einen Vorgelegemechanismus (7) und einen Niedrig-/Hoch-Umschaltmechanismus (10) aufweist, wobei:
der Planetengetriebemechanismus (6) einen ersten Träger (C), der ein erstes Ritzel (P1) und ein zweites Ritzel (P2) hat, die in der Achsrichtung angeordnet sind und die sich zusammen als eine Einheit drehen, so wie ein erstes Sonnenrad (S1) aufweist, das mit dem ersten Ritzel (P1) verzahnt ist,
**dadurch gekennzeichnet, dass**
der Planetengetriebemechanismus (6) ein einfaches Planetengetriebe (11) aufweist, welches die Drehung des ersten Trägers (C) und des ersten Sonnenrads (S1) auf den Vorgelegemechanismus (7) überträgt, wobei das einfache Planetengetriebe (11) ein erstes Element (R3), ein zweites Element (S3) und ein drittes Element (C0) hat, wobei der erste Träger (C) mit dem ersten Element (R3) des einfachen Planetengetriebes (11) verbunden ist und das zweite Sonnenrad (S2) mit dem zweiten Element (S3) des einfachen Planetengetriebes (11) verbunden ist.

2. Kontinuierlich variables Getriebe gemäß Anspruch 1, wobei das zweite Sonnenrad (S2) mit dem zweiten Ritzel (P2) verzahnt ist.

3. Kontinuierlich variables Getriebe gemäß Anspruch 1 oder 2, ferner mit einer kontinuierlich variablen Geschwindigkeitsänderungseinheit (5) der Toroidbauart, wobei
die Drehung einer Eingangswelle in den ersten Träger (C) eingegeben wird und die Ausgabedrehung, welche die Drehung der Eingangswelle (12) ist, nachdem die Richtung und die Geschwindigkeit davon durch die kontinuierlich variable Geschwindigkeitsänderungseinheit (5) der Toroidbauart geändert wurden, in das erste Sonnenrad (S1) eingegeben wird.

4. Kontinuierlich variables Getriebe gemäß einem der Ansprüche 1 oder 3, wobei
in einem niedrigen Modus gemäß dem Niedrig-/Hoch-Umschaltmechanismus (10) die Richtung der Drehung des dritten Elements (C0) des einfachen Planetengetriebes (11) durch den Vorgelegegetriebemechanismus (7) umgekehrt und zu einer Abgabewelle (13) ausgegeben wird; und
in einem hohen Modus gemäß dem Niedrig-/Hoch-Umschaltmechanismus (10) die Drehung des zweiten Sonnenrads (S2) zu der Ausgabewelle (13) ausgegeben wird.

5. Kontinuierlich variables Getriebe gemäß einem der Ansprüche 1, 3 oder 4, wobei das erste Element (R3) des einfachen Planetengetriebes (11) ein Hohlrad (R3) ist, das zweite Element (R3) ein Sonnenrad (R3) ist und das dritte Element ein Träger (C0, C01) ist.

6. Kontinuierlich variables Getriebe gemäß Anspruch 5, wobei der dritte Träger (C0, C01) ein drittes Ritzel (P3) hat, das mit dem Hohlrad (R3) und dem Sonnenrad (S3) des einfachen Planetengetriebes (11) verzahnt ist.

7. Kontinuierlich variables Getriebe gemäß Anspruch 5 oder 6, wobei der Vorgelegemechanismus (7) ein Doppelritzelplanetengetriebe (14) aufweist, das einen dritten Träger (C0), der ein viertes und ein fünftes Ritzel (P4, P5) stützt, die miteinander verzahnt sind, ein viertes Sonnenrad (S0), das mit dem vierten Ritzel (P4) verzahnt ist, und ein zweites Hohlrad (R0) hat, das mit dem fünften Ritzel (P5) verzahnt ist;
wobei der Träger (C0) des einfachen Planetengetriebes (11) in dem Planetengetriebemechanismus (6) und der dritte Träger (C0) einstückig ausgebildet sind, und
in dem niedrigen Modus die Drehung des vierten Sonnenrads (S0) zu der Ausgabewelle (13) übertragen wird, während das zweite Hohlrad (R0) gegen die Drehung gehalten wird.

8. Kontinuierlich variables Getriebe gemäß Anspruch 5 oder 6, wobei der Vorgelegemechanismus (7) ein Doppelritzelplanetengetriebe aufweist, das einen dritten Träger (C01), welcher ein viertes (P4) und ein fünftes Ritzel (P5) stützt, die miteinander verzahnt sind, ein viertes Sonnenrad (S0), das mit dem dritten Ritzel (C01) verzahnt ist, und ein zweites Hohlrad (R0) hat, das mit dem fünften Ritzel (P5) verzahnt ist;
wobei der Träger (C01) des einfachen Planetengetriebes (11) in dem Planetengetriebemechanismus (6) und das vierte Sonnenrad (S0) verbunden sind; und
in dem niedrigen Modus die Drehung des dritten Trägers (C01) zu der Ausgabewelle (13) übertragen wird, während das zweite Hohlrad (R0) gegen die Drehung gehalten wird.

9. Kontinuierlich variables Getriebe gemäß einem der Ansprüche 1, 3 bis 8, wobei die kontinuierlich variable Geschwindigkeitsänderungseinheit der Toroidbauart (5) zwei Eingabescheiben (2), eine zwischen diesen zwei Eingabescheiben (2) angeordnete Ausgabescheibe (3) und zwischen den Eingabescheiben (2) und der Ausgabescheibe (3) zwischengeordnete Walzen (4) aufweist;
wobei die zwei Eingabescheiben (2), die Eingabewelle (12) und der erste Träger (C) des Planetengetriebemechanismus (6) alle im Wesentlichen einstückig miteinander ausgebildet sind und die kontinuierlich variable Geschwindigkeitsänderungseinheit (5) und der Planetengetriebemechanismus (6) so gestützt sind, dass ein Achsschub aufgehoben wird; und
das erste und das zweite Sonnenrad (S1, S2) in der Achsschubrichtung über Achsschublager (53) mit Bezug auf den einstückig ausgebildeten ersten Träger (C) oder die Eingabewelle (12) gestützt sind.

10. Kontinuierlich variables Getriebe gemäß Anspruch 9, wobei das erste Achsschublager (53) zwischen dem ersten Sonnenrad (S1) und dem ersten Träger (C) zwischengeordnet ist;
ein zweites Achsschublager (56) zwischen dem ersten Träger (C) und dem Sonnenrad (S3) des einfachen Planetengetriebes (11) zwischengeordnet ist; und
der Achsschub von dem ersten Sonnenrad (S1), der auf den ersten Träger (C) wirkt, und der Achsschub von dem zweiten Sonnenrad (S2), der über das dritte Sonnenrad (56), welches mit dem zweiten Sonnenrad (S2) integriert ist, im Wesentlichen in der Achsrichtung wirkt, so arbeiten, dass sie im Wesentlichen mit der gleichen Kraft über das erste und das zweite Achsschublager (53, 56) gegeneinander drücken.

## Revendications

1. Transmission à variation continue qui comprend un mécanisme (6) à engrenage planétaire, un mécanisme (7) à pignon intermédiaire, et un mécanisme (10) de commutation Bas/Haut, où :
le mécanisme (6) à engrenage planétaire comprend un premier porte-satellite (C) qui a un premier pignon (P1) et un deuxième pignon (P2) qui sont agencés dans la direction axiale et qui tournent ensemble comme étant une unité, un premier planétaire (S1) qui est engrené avec le premier pignon (P1),
**caractérisé en ce que**
le mécanisme (6) à engrenage planétaire comprend un engrenage planétaire simple (11) qui transmet une rotation du premier porte-satellite (C) et du premier planétaire (S1) du mécanisme (7) à pignon intermédiaire, où l'engrenage planétaire simple (11) a un premier élément (R3), un deuxième élément (S3), et un troisième élément (C0), où le premier porte-satellite (C) est relié au premier élément (R3) de l'engrenage planétaire simple (11) et le deuxième planétaire (S2) est relié au deuxième élément (S3) de l'engrenage planétaire simple (11).

2. Transmission à variation continue selon la revendication 1, dans laquelle le deuxième planétaire (S2) est engrené avec le deuxième pignon (P2).

3. Transmission à variation continue selon les revendications 1 ou 2, comprenant en outre une unité (5) de changement de vitesse à variation continue de type toroïdale, où
une rotation d'un arbre d'entrée est introduite au premier porte-satellite (C), et une rotation de sortie, qui est la rotation de l'arbre d'entrée (12) après que sa direction et sa vitesse ont été modifiées par l'unité (5) de changement de vitesse à variation continue de type toroïdale, est introduite au premier planétaire (S1).

4. Transmission à variation continue selon l'une des revendications 1 ou 3, dans laquelle
dans un mode Bas selon le mécanisme (10) de commutation Bas/Haut, une rotation du troisième élément (C0) de l'engrenage planétaire simple (11) est réalisée dans la direction inverse par le mécanisme (7) à pignon intermédiaire et délivrée en sortie à un arbre de sortie (13) ; et
dans un mode Haut selon le mécanisme (10) de commutation Bas/Haut, une rotation du deuxième planétaire (S2) est délivrée en sortie à l'arbre de sortie (13).

5. Transmission à variation continue selon l'une des revendications 1, 3 ou 4, dans laquelle le premier élément (R3) de l'engrenage planétaire simple (11) est une couronne (R3), le deuxième élément (S3) est un planétaire (S3), et le troisième élément est un porte-satellite (C0, C01).

6. Transmission à variation continue selon la revendication 5, dans laquelle le troisième porte-satellite (C0, C01) a un troisième pignon (P3) qui est engrené avec la couronne (R3) et le planétaire (S3) de l'engrenage planétaire simple (11).

7. Transmission à variation continue selon la revendication 5 ou 6, dans laquelle le mécanisme (7) à pignon intermédiaire comporte un pignon planétaire double (14) qui a un troisième porte-satellite (C0) qui supporte des quatrième et cinquième pignons (P4, P5) qui sont engrenés l'un avec l'autre, un quatrième planétaire (S0) qui est engrené avec le quatrième pignon (P4), et
une deuxième couronne (R0) qui est engrenée avec le cinquième pignon (P5) ;
le porte-satellite (C0) de l'engrenage planétaire simple (11) dans le mécanisme à engrenage planétaire (6) et le troisième porte-satellite (C0) sont formés en un seul bloc ; et,
dans le mode Bas, une rotation du quatrième planétaire (S0) est transmise à l'arbre de sortie (13) tandis que la deuxième couronne (R0) est immobilisée en rotation.

8. Transmission à variation continue selon la revendication 5 ou 6, dans laquelle le mécanisme (7) à pignon intermédiaire comporte un engrenage planétaire double qui a un troisième porte-satellite (C01) qui supporte des quatrième (P4) et cinquième (P5) pignons qui sont engrenés l'un avec l'autre, un quatrième planétaire (S0) qui est engrené avec le troisième pignon (C01), et une deuxième couronne (R0), qui est engrenée avec le cinquième pignon (P5) ;
le porte-satellite (C01) de l'engrenage planétaire simple (11) dans le mécanisme à engrenage planétaire (6) et le quatrième planétaire (S0) sont reliés ; et,
dans le mode Bas, une rotation du troisième porte-satellite (C01) est transmise à l'arbre de sortie (13) tandis que la deuxième couronne (R0) est immobilisée en rotation.

9. Transmission à variation continue selon l'une quelconque des revendications 1, 3 à 8, dans laquelle l'unité (5) de changement de vitesse à variation continue de type toroïdale possède deux disques d'entrée (2), un disque de sortie (3) placé entre ces deux disques d'entrée (2), et des rouleaux (4) pris en sandwich entre les disques d'entrée (2) et le disque de sortie (3) ;
les deux disques d'entrée (2), l'arbre d'entrée (12), et le premier porte-satellite (C) du mécanisme à engrenage planétaire (6) sont tous formés sensiblement en un seul bloc les uns avec les autres et l'unité (5) de changement de vitesse à variation continue et le mécanisme à engrenage planétaire (6) sont supportés de sorte que la poussée soit annulée ; et
les premier et deuxième planétaires (S1, S2) sont supportés dans la direction de poussée à travers des paliers de butée (53) par rapport au premier porte-satellite (C) ou à l'arbre d'entrée (12) formés en un seul bloc.

10. Transmission à variation continue selon la revendication 9, dans laquelle le premier palier de butée (53) est interposé entre le premier planétaire (S1) et le premier porte-satellite (C) ;
un deuxième palier de butée (56) est interposé entre le premier porte-satellite (C) et le planétaire (S3) de l'engrenage planétaire simple (11) ; et
une poussée du premier planétaire (S1) qui agit sur le premier porte-satellite (C) et une poussée du deuxième planétaire (S2) qui agit à travers le troisième planétaire (56) qui est intégré au deuxième planétaire (S2) pratiquement dans la direction axiale agissent pour pousser l'un contre l'autre pratiquement avec la même force à travers des premier et deuxième paliers de butée (53, 56).
